# Europäisches Patentamt

# European Patent Office

# Office européen des brevets

(19)

(11) Veröffentlichungsnummer: **0 095 592**
**B1**

(12) # EUROPÄISCHE PATENTSCHRIFT

(45) Veröffentlichungstag der Patentschrift:
**13.09.89**

(21) Anmeldenummer: **83104417.7**

(22) Anmeldetag: **05.05.83**

(51) Int. Cl.⁴: **H 04 N 1/032**

(54) **Vorrichtung zum Herstellen eines Elektrodenkammes.**

(30) Priorität: **07.05.82 DE 3217290**

(43) Veröffentlichungstag der Anmeldung:
**07.12.83 Patentblatt 83/49**

(45) Bekanntmachung des Hinweises auf die Patenterteilung:
**13.09.89 Patentblatt 89/37**

(84) Benannte Vertragsstaaten:
**AT BE CH DE FR GB IT LI NL SE**

(56) Entgegenhaltungen:
**DE-A-2 260 227**
**DE-A-2 261 529**
**FR-A-2 228 245**
**US-A-4 165 514**

(73) Patentinhaber: **DR.- ING. RUDOLF HELL GmbH,
Grenzstrasse 1-5, D-2300 Kiel 14 (DE)**

(72) Erfinder: **Pointner, Martin, Colomanstrasse 28,
D-8011 Kirchseon (DE)**
Erfinder: **Sommer, Rüdiger, Tilsiter Strasse 7,
D-2313 Raisdorf (DE)**

## Beschreibung

Die Erfindung bezieht sich auf eine Vorrichtung zum Herstellen eines Elektrodenkammes, bei dem mindestens eine Reihe von als nadelförmige Aufzeichnungselektroden dienenden Drahtstücken in einer angespritzten Harzleiste fixiert sind, unter Verwendung einer mehrteiligen Wickel- und Gießform, deren Formteile aneinander legbar sind und an der an einander gegenüberliegenden ebenen Seitenflächen in flachen rechteckförmigen ersten Ausnehmungen Schaltungs- oder Leitungsplatten anbringbar sind und auf der nach dem Anbringen der Schaltungs- oder Leiterplatten ein dem Durchmesser der nadelförmigen Aufzeichnungselektroden entsprechend starker Draht in Windungen mit vorbestimmten gegenseitigen Abständen aufwickelbar ist, wobei die mehrteilige Wickel- und Gießform mindestens zwei parallel zueinander und zu seiner Längsachse verlaufende zweite Aufnehmungen aufweist, die mindestens einen Hohlraum bilden, der zum Eingießen einer die Harzleisten bildenden Gießharzmasse dient, wobei zwischen den ersten und zweiten Ausnehmungen Auflagestege für den Wicklungsdraht vorgesehen sind und nach dem Anbringen der Schaltungs- oder Leiterplatten und Aufwicklung des Drahtes die Windungen durch Klemmen festgehalten und mit den Schaltungs- oder Leiterplatten fest kontaktiert werden, sowie auf einem mit dieser Vorrichtung hergestellten Elektrodenkamm.

Elektrodenkämme dieser Art werden zum Anfertigen von genauen Kopien einer Vorlage benötigt, wobei mit Hilfe des Elektrodenkammes das Vorlagepapier entsprechend der Elektrodenanordnung punktweise aufgeladen wird, so daß beim Aufbringen eines Toners dieser an den entsprechenden Punkten haften bleibt. Um eine hohe Aufzeichnungsgüte von 8 Punkten pro Millimeter zu erhalten, werden die Elektroden meist in zwei Reihen mit je 250 µm Teilung und 125 µm Versatz angeordnet. Ein solcher Elektrodenkamm enthält also gewöhnlich bis zu 2000 Aufzeichnungselektroden, welche parallel zueinander angeordnet und mittels eines duroplastischen Harzes fixiert sind. Zum Herstellen solcher Nadelelektroden wird gewöhnlich ein Draht in Windungen von bestimmter Steigung auf eine Wickelform aufgewickelt und nach Fixierung der einzelnen Windungen mit Hilfe des duroplastischen Harzes werden die einzelnen Windungen wieder aufgetrennt.

Durch die DE-A-2 261 529 ist eine Vorrichtung zum Herstellen von aus zahlreichen Nadeln zusammengesetzten Aufzeichnungselektroden bekannt geworden. Hierbei wird eine mehrteilige Form mit einem oberen und einem unteren Formteil verwendet. Das untere Formteil weist hierbei eine ebene Oberseite und eine im wesentlichen konvex gerundete Unterseite auf. Die Seitenflächen des unteren Formteils weisen im oberen Bereich gegenüberliegende ebene Flächenteile auf, an welche Leiterplatten zur Anlage kommen, welche nach dem Aufwickeln des Drahtes mit diesen z. B. durch Löten verbunden werden. In der ebenen Oberseite des unteren Formteils sind zwei parallel zueinander und zur Längsachse des unteren Formteils verlaufende rechteckförmige Ausnehmungen zum Einspritzen einer Gießharzmasse ausgebildet. Auf das untere Formteil wird ein Draht in Windungen mit vorbestimmten gegenseitigen Abständen aufgewickelt und dann das obere Formteil aufgesetzt, das entsprechende Ausnehmungen aufweist. Durch Einspritzen einer Harzmasse in einen zwischen den rechteckigen Ausnehmungen des oberen und des unteren Formteils gebildeten Hohlraum werden zwei Harzleisten gebildet, in denen je eine Reihe von Aufzeichnungselektroden fixiert ist. Die zwischen den beiden Ausnehmungen bzw. Harzleisten verlaufenden Teile der Drahtwindungen werden abgeschnitten. Zur Bildung eines Elektrodenkammes fügt man zwei solcher Harzleisten mit ihren die Nadeln tragenden Flächen zusammen. Das Zusammenfügen dieser Harzleisten muß so vorgenommen werden, daß die Nadelelektroden der beiden Reihen so gegeneinander versetzt sind, daß die Nadeln der einen Reihe jeweils dem Zwischenraum zwischen zwei Nadeln der anderen Reihe gegenüberstehen und die Enden der Nadeln in zwei geraden Längsreihen von einem zum anderen Ende verlaufen. Dies setzt nicht nur eine sehr genaue Herstellung der Harzleisten voraus, sondern auch ein ganz genaues Zusammenfügen dieser Harzleisten. Ein weiterer Nachteil ist noch darin zu sehen, daß die Harzleisten mit den Leiterplatten über die flexiblen Drahtwindungen in Verbindung stehen, so daß die Gefahr von Beschädigungen einzelner Windungen nicht auszuschließen ist.

Der Erfindung liegt die Aufgabe zugrunde, eine Vorrichtung zu schaffen, die nicht nur die Herstellung eines Elektrodenkammes erleichtert, sondern auch die Herstellung eines einteiligen Elektrodenkammes ermöglicht, der mit seinen Schaltungs- oder Leiterplatten eine kompakte Bauform bildet.

Diese Aufgabe wird mit einer Vorrichtung erreicht, die gemäß der Erfindung dadurch gekennzeichnet ist, daß die vorzugsweise im Querschnitt rechteckförmige Wickel- und Gießform aus zwei symmetrisch ausgebildeten Hälften besteht, an deren symmetrisch zur Trennebene liegenden Seitenflächen flache, rechteckförmige Ausnehmungen zum Anbringen der Schaltungs- oder Leiterplatten vorgesehen sind, an die sich unmittelbar Auflagestege für den Wicklungsdraht und die Ausnehmungen für eine Gießharzleiste anschließen, daß nach dem Anbringen der Schaltungs- oder Leiterplatten und Aufwicklung des Drahtes die Windungen an beiden Hälften durch Klemmen festgehalten werden, daß danach die Windungen in der Trennebene durchgetrennt werden und die einzelnen Windungen des Wicklungsdrahtes mit der Schaltungs- oder Leiterplatte kontaktiert werden und daß zum Eingießen der Gießharzmasse zur Ausbildung eines kompakten Elektrodenkammes die beiden Hälften gegeneinander um 180° gedreht und so zusammengesteckt werden, daß die an den Auflagestegen aufliegenden Windungen des Wicklungsdrahtes in zwei um eine halbe Teilung versetzte Reihen angeordnet sind.

Die symmetrische Ausbildung der Wicklungshälften erleichtert wesentlich die Herstellung der Vorrichtung. Nach dem Wickeln und Kontaktieren kann der Elektrodenkamm in einem Gießvorgang komplett mit beiden Nadelreihen im entsprechenden Abstand hergestellt werden. Vorzugsweise sind die flachen Ausnehmungen in den Wicklungshälften des Wicklungskörpers für die Schaltungs- oder Leiterplatten so ausgebildet, daß die Schaltungs- oder Leiterplatten symmetrisch im spitzen Winkel zur Trennebene bzw. zur Ebene des Schreibkammes liegen. Dadurch ist die Herstellung eines kompakt vergossenen einteiligen Elektrodenkammes mit den Schaltungs- oder Leiterplatten möglich. Dies hat den erheblichen Vorteil, daß Kurzschlüsse und Drahtbrüche zuverlässig ausgeschlossen sind. Die leicht schräge Anordnung der Schaltungs- oder Leiterplatten gewährleistet außerdem ein sicheres Aufliegen der Drähte am Auflagesteg. Damit die nadelförmigen Aufzeichnungselektroden exakt parallel angeordnet sind, sind die beiden Wicklungshälften beim Vergießen gegeneinander schräg verstiftet, um den Gewindesteigungswinkel auszugleichen. Damit außerdem die beiden Drahtlageebenen parallel liegen, ist vorzugsweise ein zusätzlicher Auflagesteg vorgesehen, der aus fertigungstechnischen Gründen ohne Gewindesteigung hergestellt wird. Die Drähte werden unmittelbar nach dem Wickeln mit einer Schablone abgedeckt und nur im Stegbereich mit einem Sprühlack gesichert, damit sie die Teilungsgenauigkeit beibehalten.

Zur Versteifung des Elektrodenkammes im Kammbereich sind in den Ausnehmungen glasfaserverstärkte Leisten eingelegt. Die Befestigung erfolgt hierbei vorzugsweise mit konischen Stiften, damit die Formteile nach dem Ausgießen getrennt werden können.

Bei einer bevorzugten Ausführungsform ist die Auflagefläche der Schaltungs- oder Leiterplatten mit konischen flachen Kanälen ausgestattet. Sie dienen zum Ansaugen der mit einer Ansaugbohrung versehenen Anschlußplatten beim Auflöten der Anschlußdrähte. Eine konische Form des Ansaugkanals ermöglicht eine leichte Entformung des gegossenen Teils.

Anhand der Zeichnung, in der ein Ausführungsbeispiel dargestellt ist, werden die erfindungsgemäße Vorrichtung und der damit hergestellte Elektrodenkamm näher erläutert.

Es zeigen:

Figur 1  eine Schnittansicht durch die Wickel- und Gießform beim Wickelaufbau,

Figur 2  einen Schnitt durch die Wickel- und Gießform beim Gießaufbau,

Figur 3  eine Seitenansicht der Wickel- und Gießform beim Wickelaufbau gemäß Figur 1,

Figur 4  eine Ansicht von unten auf die Wickel- und Gießform beim Wickelaufbau gemäß Figur 1,

Figur 5  eine Ansicht von oben auf die Wickel- und Gießform beim Gießaufbau gemäß Figur 2,

Figur 6  eine Vorderansicht des mit der Vorrichtung gemäß Figur 1 bis 5 hergestellten Elektrodenkammes,

Figur 7  eine Seitenansicht des Elektrodenkammes gemäß Figur 6,

Figur 8  eine Ansicht von oben auf den Elektrodenkamm gemäß Figur 6,

Figur 9  eine vergrößerte Ansicht der Schneidkante gemäß Figur 7.

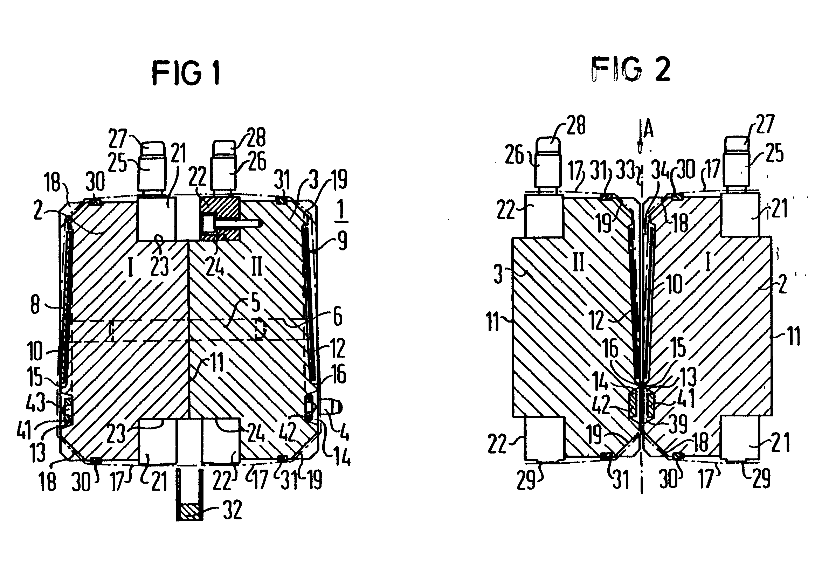

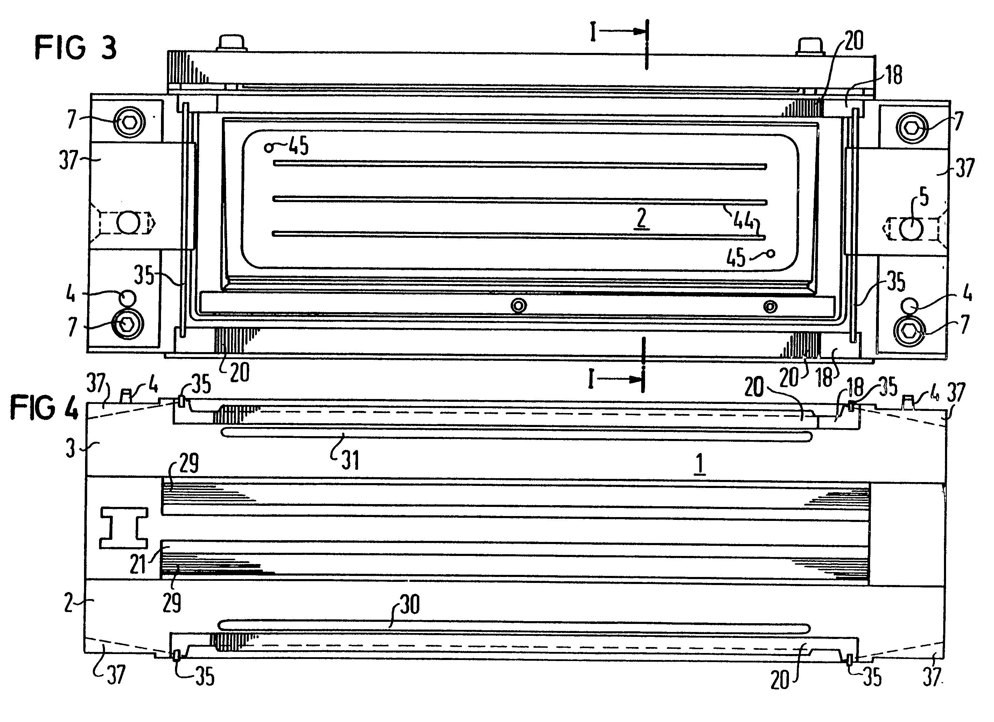

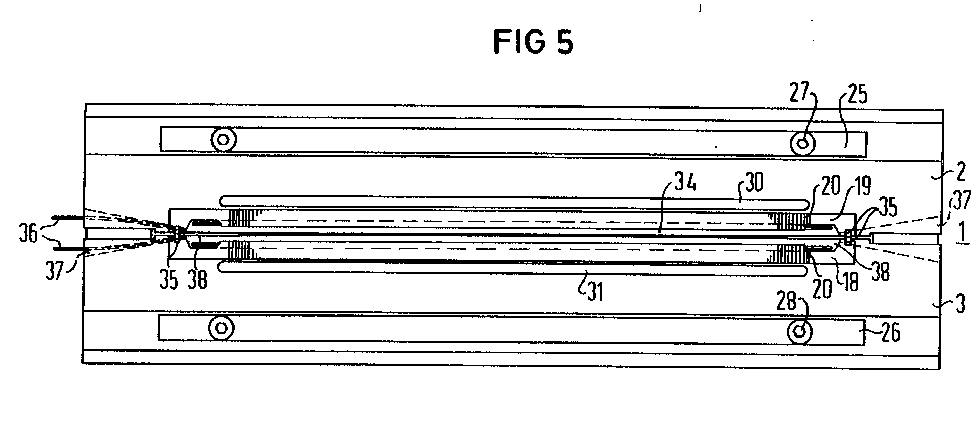

Mit 1 ist allgemein eine Wickel- und Gießform bezeichnet, die aus zwei symmetrisch ausgebildeten Hälften 2 und 3 besteht. Die beiden Hälften 2 und 3 sind völlig gleich ausgebildet, lediglich mit dem Unterschied, daß die Hälfte 3 an der Seitenfläche zwei Paßstifte 4 aufweist zur Justierung des Gießaufbaues gemäß Figur 2 und 5, die mit entsprechenden Bohrungen in der Seitenfläche der Hälfte 2 zusammenwirken. Die Justierung der beiden Hälften 2 und 3 der Wickel- und Gießform 1 beim Wickelaufbau gemäß Figur 1 erfolgt durch Paßstifte 5, die in entsprechende Bohrungen 6 der Hälften 2 und 3 eingelegt sind. Die beiden Hälften 2 und 3 werden sowohl beim Wickelaufbau gemäß Figur 1 als auch beim Gießaufbau gemäß Figur 2 durch vier Zugschrauben 7 bzw. entsprechende Muttern zusammengehalten, wie in Figur 3 angedeutet ist. Symmetrisch zur Trennebene 11 sind in den Seitenflächen der Hälften 2 und 3 fläche rechteckförmige Ausnehmungen 8 bzw. 9 für Schaltungs- oder Leiterplatten 10 bzw. 12 vorgesehen und zwar derart, daß sich eine leicht schräge Anordnung der Schaltungs- oder Leiterplatten 10 und 12 ergibt, wie Figur 1 und 2 zeigen. Anschließend an die flachen, rechteckförmigen Ausnehmungen 8 und 9 sind Ausnehmungen 13 und 14 vorgesehen, die sich über die Länge der rechteckförmigen Ausnehmungen 8 und 9 erstrecken. Diese Ausnehmungen 13 und 14 sind so in den Hälften 2 und 3 ausgebildet, daß sich Auflagestege 15 und 16 für die einzelnen Windungen eines in Figur 1 und 2 strichpunktiert dargestellten Wicklungsdrahtes 17 ergeben.

Nach dem Anbringen der Schaltungs- oder Leiterplatten 10 und 12 an den ebenen Seitenflächen der Hälften 2 und 3 der Wickel- und Gießform 1 wird der Wicklungsdraht 17 in Windungen von geringer Steigung von etwa 250 µm in Umfangsrichtung auf die beiden Hälften 2 und 3 aufgewickelt. Um die Windungen des Drahtes 17 genau in vorbestimmten gegenseitigen Abständen zu halten, kann an den abgefasten Kanten 18 und 19 ein Teilungsgewinde 20 vorgesehen sein, wie aus Figur 3 bis 5 zu entnehmen ist. Nach dem Wickeln und Kontaktieren der einzelnen Windungen mit den entsprechenden Leiterbahnen der Schaltungs- oder Leiterplatten 10 und 12 wird der auf die Wickel- und Gießform 1 gemäß Figur 1 aufgewickelte Wicklungsdraht 17 mit Hilfe von Klemmleisten 21 und 22 festgeklemmt, die in entsprechenden Ausnehmungen 23 und 24 der Hälften 2 und 3 befestigt sind. Zum Festklemmen des Wicklungsdrahtes 17 dienen Klemmleisten 25 und 26, die mit Hilfe von Schrauben 27 und 28 festklemmbar sind. Zur sicheren Klemmung ist an den Klemmleisten 21 und 22 ein Sägezahnprofil 29 ausgebildet, das der Drahtvorspannung entgegengesetzt gerichtet ist. Die Klemmleisten 21 und 22 bzw. 25 und 26 sind aus gehärtetem Stahl ausgeführt. Damit die Vorspannung des Wicklungsdrahtes 17 sicher erhalten bleibt, insbesondere beim Ankontaktieren der einzelnen Windungen ist über die gesamte Länge der Hälften 2 und 3 je eine Gummileiste 30 bzw. 31 angeklebt.

Nach dem Wickeln wird mit Hilfe einer Doppelschlagschere 32 die auf die beiden Hälften 2 und 3 der Wickel- und Gießform 1 aufgebrachte Wicklung an beiden Seiten durchgetrennt, dann die Hälfte 2 abgezogen und um 180° gedreht und somit die Hälfte 3 zusammengesteckt, wie Figur 2 zeigt. Hierbei rasten die Paßstifte 4 in entsprechende Bohrungen in der Hälfte 2. Wie Figur 2 zeigt, nehmen die Schaltungs- oder Leiterplatten 10 und 12 zueinander eine leicht geneigte Stellung ein, die symmetrisch zur Kammebene 33 liegen, so daß sich ein Hohlraum 34 mit keilförmigem Querschnitt ergibt, während die Auflagestege 15 und 16 parallel zueinander angeordnet sind. Die Ausnehmungen 13 und 14 bilden ebenfalls einen Hohlraum, der nach Ausfüllen der Wickel- und Gießform beim Gießaufbau gemäß Figur 2 die die eigentliche Harzleiste 40 bilden. Damit das von oben in Pfeilrichtung A eingefüllte Gießharz seitlich nicht entweichen kann, sind Dichtleisten 35 vorgesehen, die den Raum stirnseitig abschließen, aber die bandförmigen Anschlußleitungen 36 jeder Schaltungs- oder Leiterplatte 10 und 12 Durchlaß gewähren. Aus diesem Grunde sind an den Hälften 2 und 3 keilförmige Einlaßöffnungen 37 vorgesehen, wie Figur 3 bis 5 zeigen.

Der sich über die gesamte Länge der Schaltungs- bzw. Leiterplatten 10 und 12 hinziehende Hohlraum 34 ist an beiden Enden 38 wulstförmig erweitert, damit man ein stabiles Formstück erhält.

Nach dem Ausgießen der Hohlräume 34 und 13 und 14 entsteht am unteren Ende die eigentliche Schreibkante 39. An dieser Stelle werden die überstehenden Drähte entfernt, wobei die in der Harzleiste 40 verbleibenden Drahtstücke die eigentlichen nadelförmigen Aufzeichnungselektroden bilden. Um beim Nacharbeiten der Schreibkante 39 keine Veränderungen im Schriftbild zu erhalten, müssen zumindest an dieser Stelle die Drähte zueinander parallel geführt sein. Dazu werden die beiden Hälften 2 und 3 gegeneinander schräg verstiftet, um den Gewindesteigungswinkel auszugleichen.

Zur Versteifung des Elektrodenkammes 46 werden in die Ausnehmungen 13 und 14 glasfaserverstärkte Leisten 41 und 42 eingelegt, die mit Hilfe von Konusstiften 43 gehalten sind, damit die Form nach dem Ausgießen geöffnet werden kann. Ein Konusstiftloch dient gleichzeitig im abgegossenen Kamm als Fixierpunkt für die erste Lage des Wicklungsdrahtes 17.

Ferner kann die Auflagefläche für die Schaltungs- und Leiterplatten 10 bzw. 12 in den flachen Ausnehmungen 8 bzw. 9 mit flachen konischen Kanälen 44 ausgestattet sein, wie Figur 3 zeigt. Sie dienen zum Ansaugen der mit einer Ansaugbohrung versehenen Schaltungs- oder Leiterplatten 10 und 12 beim Auflöten der Anschlußdrähte. Die konische Form der Ansaugkanäle 44 ermöglicht eine leichte Entformung des Gießteils.

Die Justierung der Schaltungs- oder Leiterplatten 10 und 12 erfolgt vorzugsweise nach dem Wickeln der Formen. Die der Vorzentrierung dienenden Stifte 45 (Fig. 3) weisen deshalb eine Paßhülse auf, die von oben nach dem Wickeln zum Justieren entfernt werden kann.

Zum Anschließen der nadelförmigen Aufzeichnungselektroden ist eine Schaltungs- und Leiterplatte pro Elektrodenreihe erforderlich, auf der im gleichen Rastermaß von 250 µm die Verbindungen matrixartig herzustellen sind. Zugleich muß eine Prüfspannungsfestigkeit von 500 Volt gewährleistet sein. Um dies zu erzielen, werden die Leiterbahnen an der Schaltungs- oder Leiterplatte vollständig mit temperaturfester Isolation bedeckt, damit die lötbare Isolation der danebenliegenden Drähte nicht durch die Wärmeleitung der Leiterbahnen von unten her zerstört wird.

Vorzugsweise sind die Leiterbahnen der Leiterplatte 10 zur Erhöhung der elektrischen und thermischen Isolation vollständig mit einer temperaturfesten Isolation versehen und nur im Kontaktierbereich punktförmig freigelegt. Gegebenenfalls können diese Freilegungen bis zur Isolationsschichtoberkante metallisch erhöht und zum sicheren Verbinden mit einer Lotoberfläche versehen werden.

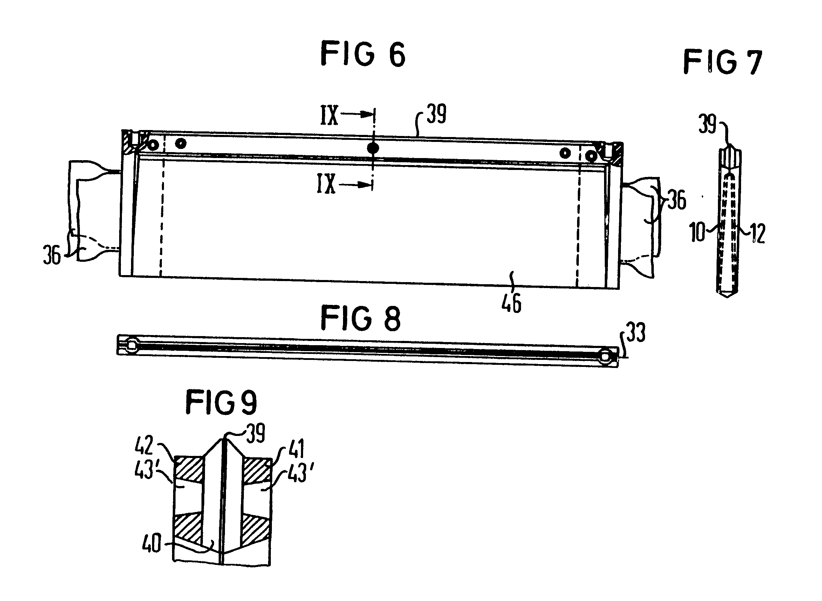

In den Figuren 6 bis 9 ist ein mit der erfindungsgemäßen Vorrichtung hergestellter Elektrodenkamm 46 in verschiedenen Ansichten bezeichnet. Hierbei können die bandförmigen Anschlußleitungen 36 als Flachkabel sowohl an den Stirnseiten als auch an der der Schreibkante 39 entgegengesetzten Seite herausgeführt sein. Figur 9 zeigt im vergrößerten Maßstab den Teil Z gemäß Figur 7a. Die nach dem Gießen verbleibenden Öffnungen der konischen Stifte 43 sind mit 43' bezeichnet.

**Patentansprüche**

1. Vorrichtung zum Herstellen eines Elektrodenkammes, bei dem mindestens eine Reihe von als nadelförmige Aufzeichnungselektroden dienenden Drahtstücken in einer angespritzten Harzleiste fixiert sind, unter Verwendung einer mehrteiligen Wickel- und Gießform (1), deren Formteile aneinander legbar sind und an der aneinander gegenüberliegenden ebenen Seitenflächen in flachen rechteckförmigen ersten Ausnehmungen (8, 9) Schaltungs- oder Leiterplatten anbringbar sind und auf der nach dem Anbringen der Schaltungs- oder Leiterplatten ein dem Durchmesser der nadelförmigen Aufzeichnungselektroden entsprechend starker Draht in Windungen mit vorbestimmten gegenseitigen Abständen aufwickelbar ist, wobei die mehrteilige Wickel- und Gießform mindestens zwei parallel zueinander und zu einer Längsachse verlaufende zweite Ausnehmungen (13, 14) aufweist, die mindestens einen Hohlraum bilden, der zum Eingießen einer die Harzleisten bildenen Gießharzmasse dient, wobei zwischen den ersten und zweiten Ausnehmungen Auflagestege (15, 16) für den Wicklungsdraht vorgesehen sind und nach dem Anbringen der Schaltungs- oder Leiterplatten (10/12) und Aufwicklung des Drahtes (17) die Windungen durch Klemmen festgehalten und mit den Schaltungs- oder Leiterplatten fest kontaktiert werden, dadurch gekennzeichnet, daß die vorzugsweise im Querschnitt rechteckförmige Wickel- und Gießform (1) aus zwei symmetrisch ausgebildeten Hälften (2, 3) besteht, an deren symmetrisch zur Trennebene (11) liegenden Seitenflächen die flachen rechteckförmigen Ausnehmungen (8 + 9) zum Anbringen der Schaltungs- und Leiterplatten (10, 12) vorgesehen sind, an die sich unmittelbar die ebenfalls an diesen Seitenflächen ausgebildeten Auflagestege (15, 16) für den Wickelungsdraht (17) und die Ausnehmungen (13, 14) für die Gießharzleiste (40) anschließen, daß nach dem Anbringen der Schaltungs- oder Leiterplatten (10, 12) und Aufwicklung des Drahtes (17) sowie Festklemmen der Windungen an beiden Hälften (2, 3) die Windungen in der Trennebene (11) durchgetrennt werden und danach die einzelnen Windungen des Wickelungsdrahtes (17) mit der Schaltungs- oder Leiterplatte (10, 12) fest kontaktiert werden, und daß zum Eingießen der Gießharzmasse zur Ausbildung eines kompakten Elektrodenkammes (46) die beiden Hälften (2, 3) gegeneinander um 180° gedreht und so zusammengesteckt werden, daß die an den Auflagestegen (15, 16) aufliegenden Windungen des Wicklungsdrahtes (17) in zwei um eine halbe Teilung versetzte Reihe angeordnet sind.

2. Vorrichtung nach Anspruch 1 dadurch gekennzeichnet, daß die flachen Ausnehmungen (8, 9) in den Hälften (2, 3) der Wicklungs- und Gießform (1) für die Schaltungs- und Leiterplatten (10, 12) so ausgebildet sind, daß die Schaltungs- oder Leiterplatten (10, 12) symmetrisch im spitzen Winkel zur Trennebene (11) bzw. zur Ebene des Elektrodenkammes (46) liegen.

3. Vorrichtung nach Anspruch 1 oder 2, dadurch gekennzeichnet, daß zur Versteifung des Elektrodenkammes (46) in den Ausnehmungen (8, 9) glasfaserverstärkte Leisten (41, 42) eingelegt sind.

4. Vorrichtung nach Anspruch 3, dadurch gekennzeichnet, daß die Befestigung der glasfaserverstärkten Leisten (41, 42) in den Ausnehmungen (8, 9) mit Hilfe von konischen Stiften (43) erfolgt.

5. Vorrichtung nach Anspruch 4, dadurch gekennzeichnet, daß ein Konusstiftloch im abgegossenen Elektrodenkamm (46) zugleich als Fixierpunkt die für die Lage der ersten Windung des Wicklungsdrahtes (17) dient.

6. Vorrichtung nach einem der Ansprüche 1 bis 5, dadurch gekennzeichnet, daß die beiden Hälften (2, 3) beim Vergießen zum Ausgleich des Gewindesteigungswinkels gegeneinander um diesen Winkel schräg verstiftet sind.

7. Vorrichtung nach einem der Ansprüche 1 bis 6, dadurch gekennzeichnet, daß die Auflagefläche für die Schaltungs- bzw. Leiterplatten (10, 12) mit im Querschnitt konischen flachen Kanälen (44) versehen ist zum Ansaugen der Schaltungs- bzw. Leiterplatten (10, 12).

8. Vorrichtung nach einem der Ansprüche 1 bis 7, dadurch gekennzeichnet, daß zur sicheren Klemmung der einzelnen Windungen des Wicklungsdrahtes (17) an der Unterseite der Klemmleisten (21, 22) ein gehärtetes, der Drahtvorspannung entgegengesetzt wirkendes Sägezahnprofil (29) angebracht ist.

9. Vorrichtung nach Anspruch 8, dadurch gekennzeichnet, daß zur Erhaltung der Vorspannung des Wicklungsdrahtes (17), insbesondere beim Ankontaktieren des Wicklungsdrahtes (17) an die Schaltungs- bzw. Leiterplatten (10, 12) an jeder Hälfte (2, 3) Gummileisten (30, 31) angeklebt sind.

10. Leiterplatten nach Anspruch 1 , dadurch gekennzeichnet, daß die Leiterbahnen zur Erhöhung der elektrischen und thermischen Isolation vollständig mit einer temperaturfesten Isolation versehen und nur im Kontaktierbereich punktförmig freigelegt sind.

11. Vorrichtung nach einem der Ansprüche 1 bis 9, dadurch gekennzeichnet, daß zur Drahtführung an den Hälften (2, 3) ein Teilungsgewinde (20) vorgesehen ist, das möglichst nahe der Schreibkante (39) des Elektrodenkammes (46) angeordnet ist.

12. Elektrodenkamm, hergestellt mit einer Vorrichtung nach einem oder mehreren der Ansprüche 1 bis 10, dadurch gekennzeichnet, daß die Schaltungs- oder Leiterplatten (10, 12), mit der die Schreibkante (39) bildenden Harzleiste (40) starr zu einem einteiligen Bauteil (46) vergossen sind.

**Claims**

1. A device for the production of an electrode comb, in which at least one row of wire elements acting as needle-shaped recording electrodes are secured within an injection-moulded resin bar, with the use of a multi-part winding and casting mould (1) of which the mould elements may be laid one against another and whereon circuit or conductor boards may be installed in shallow rectangular first recesses (8, 9) in mutually opposed plane lateral surfaces and whereon a wire having a gauge corresponding to the diameter of the needle-shaped recording electrodes may be wound after the installation of the circuit or conductor boards in turns with predetermined mutual spacings, the multi-part winding and casting mould having at least two second recesses (13, 14) extending parallel to one another and to a longitudinal axis, which forms at least one cavity which serves for casting therein a moulding resin composition for forming the resin bars, wherein supporting webs (15, 16) for the winding wire are provided between the first and second recesses and the turns are firmly retained by clips and fixedly placed in contact with the circuit or conductor boards after the installation of the circuit or conductor boards (10, 12) and the winding-on of the wire (17), characterized in that the winding and casting mould (1) which is preferably rectangular in cross-section comprises two symmetrically constructed halves (2, 3) on whose lateral surfaces arranged symmetrically to the separation plane (11) are provided the shallow rectangular recesses (8, 9) for installation of the circuit and conductor boards (10, 12) immediately adjacent which lie the supporting webs (15, 16) for the winding wire (17) which are also formed on these lateral surfaces and the recesses (13, 14) for the moulded resin bar (40), that after the installation of the circuit or conductor boards (10, 12) and the winding-on of the wire (17) as well as the clamping fast of the turns on both halves (2, 3) the turns are cut through on the separating plane (11) and the individual turns of the winding wire (17) are there-upon places firmly in contact with the circuit or conductor board (10, 12) and that for the purpose of casting-in the moulding resin composition to form a compact electrode comb (46), the two halves (2, 3) are turned through 180° with respect to each other and are so joined together that the turns of the winding wires (17) resting on the supporting webs (15, 16) are arranged in two rows staggered by half a division.

2. A device according to claim 1, characterized in that the shallow recesses (8, 9) in the halves (2, 3) of the winding and casting mould (1) for the circuit and conductor boards (10, 12) are so formed that the circuit or conductor boards (10, 12) are arranged symmetrically at an acute angle to the separating plane (11) or rather the plane of the electrode comb (46).

3. A device according to claim 1 or 2, characterized in that for the purpose of reinforcing the electrode comb (46), bars (41, 42) reinforced with glass fibres are inserted into the recesses (8, 9).

4. A device according to claim 3, characterized in that the fastening of the glass-fibre-reinforced bars (41, 42) in the recesses (8, 9) is effected by means of taper pins (43).

5. A device according to claim 4, characterized in that a conical pin hole in the moulded electrode comb (46) simultaneously acts as a point of attachment for the positioning of the first turn of the winding wire (17).

6. A device according to one of claims 1 to 5, characterized in that the two halves (2, 3), for the purpose of allowing for the thread pitch angle, are located by pins turned askew to each other by this angle, during the moulding operation.

7. A device according to one of claims 1 to 6, characterized in that the supporting surface for the circuit or conductor boards (10, 12) is provided with shallow cross-sectionally conical channels (44) for drawing by suction on the circuit or conductor boards (10, 12).

8. A device according to one of claims 1 to 7, characterized in that for securely clamping the individual turns of the winding wire (17), a hardened sawtooth profile (29) acting contradirectionally to the initial stress of the wire is provided on the underside of the clamping bars (21, 22).

9. A device according to claim 8, characterized in that for the purpose of maintaining the initial stress on the winding wire (17), rubber strips (30, 31) are bonded to each half (2, 3), in particular whilst placing the winding wire (17) in contact with the circuit or conductor boards (10, 12).

10. Conductor boards according to claim 1, characterized in that the conductor strips are wholly provided with a thermally resistant insulation to increase the electrical and thermal insulation and are exposed pointwise only in the contacting portion.

11. A device according to one of claims 1 to 9, characterized in that a dividing thread (20) situated as close as possible to the recording edge (39) of the electrode comb (46) is provided on the halves (2, 3) for locating the wire.

12. An electrode comb, produced by means of a device according to one or more of claims 1 to 10, characterized in that the circuit or conductor boards (10, 12) are rigidly moulded into a one-piece component (46) with the resin bar (40) forming the recording edge (39).

**Revendications**

1. Dispositif pour la fabrication d'un peigne d'électrodes, dispositif dans lequel au moins une rangée de tronçons de fils métalliques, prévus comme électrodes d'enregistrement en forme d'aiguilles, est fixée dans une barrette de résine moulée par injection, en utilisant une forme de bobinage et de coulée (1) en plusieurs parties qui sont susceptibles d'être placées les unes contre les autres, tandis que sur les faces latérales planes opposées de cette forme, des plaques de circuits ou de conducteurs imprimés sont susceptibles d'être mises en place dans de premiers évidements (8, 9) en forme de rectangles plats, et que sur cette forme, après la mise en place des plaques de circuits ou de conducteurs imprimés, un fil métallique, d'une grosseur correspondante au diamètre des électrodes d'enregistrement en forme d'aiguilles, est susceptible d'être bobiné en spires d'un pas déterminé, la forme de bobinage et de coulée en plusieurs parties comportant au moins deux seconds évidements (13, 14) parallèles entre eux et s'étendant selon un axe longitudinal, qui délimitent au moins un espace creux servant à la coulée d'une masse de résine de coulée formant les barrettes de résine, tandis qu'entre les premiers et les seconds évidements, il est prévu des nervures d'appui (15, 16) pour le fil métallique de bobinage et qu'après la mise en place des plaques de circuits ou de conducteurs imprimés (10, 12) et le bobinage du fil métallique (17), les spires sont maintenues par serrage et sont mises en contact ferme avec les plaques de circuits ou de conducteurs imprimés, dispositif caractérisé en ce que la forme de bobinage et de coulée (1), de section transversale de préférence rectangulaire, est constituée de deux moitiés symétriques (2, 3) sur les faces latérales desquelles, symétriques par rapport au plan de séparation (11), sont prévus les évidements (8, 9) en forme de rectangles plats, pour la mise en place des plaques (10, 12) de circuits ou de conducteurs imprimés, évidéments auxquels se raccordent directement les nervures d'appui (15, 16) également prévues sur ces faces latérales pour le fil métallique de bobinage (17) et les évidements (13, 14) pour la barrette en résine de coulée (40), et en ce que, après mise en place des plaques (10, 12) de circuits ou de conducteurs imprimés et bobinage du fil métallique (17) ainsi que serrage des spires sur les deux moitiés (2, 3), les spires sont coupées dans le plan de séparation (11), et ensuite les différentes spires du fil métallique de bobinage (17) sont mises en contact ferme avec les plaques (10, 12) de circuits ou de conducteurs imprimés, tandis que pour couleur la masse de résine de coulée afin de réaliser un peigne compact d'électrodes (46), les deux moitiés (2, 3) sont tournées de 180° l'une par rapport à l'autre et sont enfichées ensemble de facon que les spires, s'appliquant sur les nervures d'appui (15, 16) du fil de bobinage (17), soient disposées en deux rangées décalées d'un demi-pas.

2. Dispositif selon la revendication 1, caractérisé en ce que les évidements plats (8, 9) pour les plaques de circuits ou de conducteurs imprimés (10, 12) dans les moitiés (2, 3) de la forme de bobinage et de coulée (1) sont conformés de facon telle que les plaques de circuits ou de conducteurs imprimés (10, 12) se situent symétriquement selon un angle aigu par rapport au plan de séparation (11) ou par rapport au plan du peigne d'électrodes (46).

3. Dispositif selon la revendication 1 ou 2, caractérisé en ce que, pour rigidifier le peigne d'électrodes (46), des barrettes (41, 42) renforcées par des fibres de verre, sont insérées dans les évidements (8, 9).

4. Dispositif selon la revendication 3, caractérisé en ce que la fixation des barrettes renforcées par des fibres de verre (41, 42) dans les évidements (8, 9) s'effectue à l'aide de broches coniques (43).

5. Dispositif selon la revendication 4, caractérisé en ce qu'un trou de broche conique dans le peigne d'électrodes moulé (46), sert en même temps de point de fixation pour la position de la première spire du fil métallique de bobinage (17).

6. Dispositif selon une des revendications 1 à 5, caractérisé en ce que, lors de la coulée, les deux moitiés (2, 3) pour compenser l'angle du pas, sont embrochées l'une par rapport à l'autre selon cet angle.

7. Dispositif selon une des revendications 1 à 6, caractérisé en ce que la surface d'appui pour les plaques de circuits ou de conducteurs imprimés (10, 12) est munie de canaux plats (44), de section transversale conique, pour maintenir par succion les plaques de circuits ou de conducteurs imprimés (10, 12).

8. Dispositif selon une des revendications 1 à 7, caractérisé en ce que pour assurer avec certitude le serrage des différentes spires du fil de bobinage (17), un profilé en dents de scie, trempé (29) agissant en sens inverse de la précontrainte du fil métallique, est rapporté sur la face inférieure des barrettes de serrage (21, 22).

9. Dispositif selon la revendication 8, caractérisé en ce que, pour maintenir la précontrainte du fil de bobinage (17), notamment lors de la mise en contact de ce fil de bobinage (17) contre les plaques de circuits ou de conducteurs (10, 12), des barrettes en caoutchouc sont collées sur chaque moitié (2, 3).

10. Plaques de conducteurs imprimés selon la revendication 1, caractérisées en ce que, pour augmenter leur isolation électrique et thermique, les bandes conductrices sont munies en totalité d'une isolation résistant à la température et ne sont laissées libres que ponctuellement dans la zone de contact.

11. Dispositif selon une des revendications 1 à 9, caractérisé en ce que, pour guider le fil métallique sur les moitiés (2, 3), il est prévu un filetage de division (20) disposé aussi près que possible du bord d'enregistrement (39) du peigne d'électrodes (46).

12. Peigne d'électrodes, fabriqué avec un dispositif selon une ou plusieurs des revendications 1 à 10, caractérisé en ce que les plaques de circuits ou de conducteurs imprimés (10, 12) sont rigidement scellées avec les barrettes de résine (40) formant le bord d'enregistrement (39) pour constituer une partie constitutive (46) d'un seul tenant.

# FIG 1

# FIG 2

EP 0 095 592 B1

FIG 3

FIG 4

EP 0 095 592 B1

# FIG 5

EP 0 095 592 B1

FIG 6

FIG 7

FIG 8

FIG 9

EP 0 095 592 B1